(19) Europäisches Patentamt

European Patent Office

Office européen des brevets

(11) Veröffentlichungsnummer: **0 425 797 A1**

## (12) EUROPÄISCHE PATENTANMELDUNG

(21) Anmeldenummer: 90117491.2

(22) Anmeldetag: 11.09.90

(51) Int. Cl.⁵: **B29C 47/86**, B29C 47/20

(30) Priorität: 31.10.89 DE 3936239

(43) Veröffentlichungstag der Anmeldung:
08.05.91 Patentblatt 91/19

(84) Benannte Vertragsstaaten:
**DE FR GB IT**

(71) Anmelder: **Windmöller & Hölscher**
**Münsterstrasse 50**
**W-4540 Lengerich(DE)**

(72) Erfinder: **Feistkorn, Werner, Dr. Dipl.-Ing.**
**Fährweg 30**
**W-4401 Saerbeck(DE)**
Erfinder: **Linkies, Jürgen**
**An den Burgwiesen 47**
**W-4540 Lengerich(DE)**

Erfinder: **Upmeier, Hartmut, Dipl.-Ing.**
**Jahnstrasse 25**
**W-4540 Lengerich(DE)**
Erfinder: **Voss, Klaus-Peter, Dipl.-Ing.**
**Lessingstrasse 10**
**W-4540 Lengerich(DE)**
Erfinder: **Sensen, Klemens, Dipl.-Ing.**
**Liebigstrasse 24**
**W-4540 Lengerich(DE)**

(74) Vertreter: **Gossel, Hans K., Dipl.-Ing. et al**
**Rechtsanwälte Lorenz E.,Gossel**
**H.K.,Dipl.-Ing.,Philipps I.,Schäuble,**
**P.B.,Dr.,Jackermeier,S.,Dr,Zinnecker,A.,Dipl.--**
**Ing.,Laufhütte,D., Dr.-Ing.,Ingerle,R.E.,Dr.**
**Widenmayerstrasse 23 D-8000 München**
**22(DE)**

(54) Ringdüse für Strangpressen, vorzugsweise Folienblaskopf.

㊗ Eine Ringdüse für Strangpressen, vorzugsweise ein Blaskopf zur Herstellung von Schlauchfolien aus thermoplastischen Kunststoffen, besteht aus einem Innenring oder aus einem inneren Kern und einem Außenring, zwischen denen der ringförmige Düsenspalt gebildet ist. Um Abschnitte einer derartigen Ringdüse in einfacher Weise erwärmen und gegebenenfalls auch abkühlen zu können, ist der Innen- und/oder Außenring (1,2) der Ringdüse in mehrere Temperiersektoren unterteilt, die mit Bohrungen (4) oder Aussparungen versehen sind, in die elektrische Heizpatronen (5) eingesetzt sind

Fig.1

EP 0 425 797 A1

## RINGDÜSE FÜR STRANGPRESSEN, VORZUGSWEISE FOLIENBLASKOPF

Die Erfindung betrifft eine Ringdüse für Strangpressen, vorzugsweise einen Blaskopf zur Herstellung von Schlauchfolien aus thermoplastischen Kunststoffen, bestehend aus einem Innenring oder einem inneren Kern und einem Außenring, zwischen denen der ringförmige Düsenspalt gebildet ist.

Derartige Ringdüsen sind beispielsweise aus der DE-AS 21 40 194 sowie den DE-PS 29 47 293 und 29 50 003 bekannt.

Um stranggepreßte Rohre oder im Blasverfahren hergestellte Schlauchfolien mit über den Umfang gleiche Wand- bzw. Foliendicke herzustellen, ist es erforderlich, die Massetemperatur der Kunststoffschmelze in dem ringförmigen Düsenspalt der Extrusionsdüse beeinflussen zu können, um durch entsprechende Änderung der Viskosität den Fluß der austretenden Kunststoffschmelze beeinflussen zu können.

Bei den bekannten Ringdüsen sind die Temperiersegmente oder Temperiersektoren mit Kanälen oder Bohrungen versehen, durch die ein kühlendes oder erwärmendes Medium geleitet wird, um durch entsprechende Erhöhung oder Erniedrigung der Temperatur des jeweiligen Temperiersektors das Temperaturprofil über den Umfang der Ringdüse in der gewünschten Weise ändern zu können. Bei den bekannten Ringdüsen besteht das kühlende oder erwärmende Medium aus Luft, Öl oder anderen flüssigen oder gasförmigen Stoffen, die den Temperiersektoren Wärme zuführen oder Wärme von diesen abführen können.

Die Erwärmung der Temperiersektoren einer Ringdüse durch fließende oder strömende Medien ist jedoch aufwendig wegen der erforderlichen Anschlüsse für Zu- und Abführungsleitungen und wegen der Notwendigkeit, fließfähige Medien mit der erforderlichen Temperatur bereitzuhalten. Weiterhin kann es bei undichten Anschlüssen zu Störungen kommen.

Aufgabe der Erfindung ist es daher, eine Ringdüse der eingangs angegebenen Art zu schaffen, deren Temperiersektoren sich auf einfachere Weise erwärmen und gegebenenfalls auch abkühlen lassen.

Erfindungsgemäß wird diese Aufgabe bei einer Ringdüse der gattungsgemäßen Art dadurch gelöst, daß der Innen- und/oder Außenring in mehrere Temperiersektoren unterteilt ist, die mit Bohrungen oder Aussparungen versehen sind, in die elektrische Heizpatronen eingesetzt sind.

Bei der erfindungsgemäßen Ringdüse lassen sich die elektrischen Heizpatronen in einfacher Weise in entsprechende Bohrungen oder Aussparungen unterbringen. Die erforderlichen Leitungen zur Zuführung der elektrischen Energie lassen sich in einfacher Weise anordnen und sind wartungsarm.

Zur Erwärmung von Temperiersegmenten ist es lediglich erforderlich, den diesen jeweils zugeordneten elektrischen Heizpatronen den notwendigen Strom zuzuführen. Ist eine Abkühlung erwünscht, wird der entsprechenden Heizpatrone kein Strom zugeführt, so daß das entsprechende Temperiersegment etwa auf die Massetemperatur der aus der Ringdüse austretenden Kunststoffschmelze abkühlt.

Die erfindungsgemäße Ringdüse läßt sich insbesondere für Verfahren zur Regelung der Foliendicke von Blasfolienextruderanlagen einsetzen, wie sie in den DE-PS 29 47 293 und 29 50 003 beschrieben worden sind.

Ein Ausführungsbeispiel der Erfindung wird nachstehend anhand der Zeichnung näher erläutert. In dieser zeigt

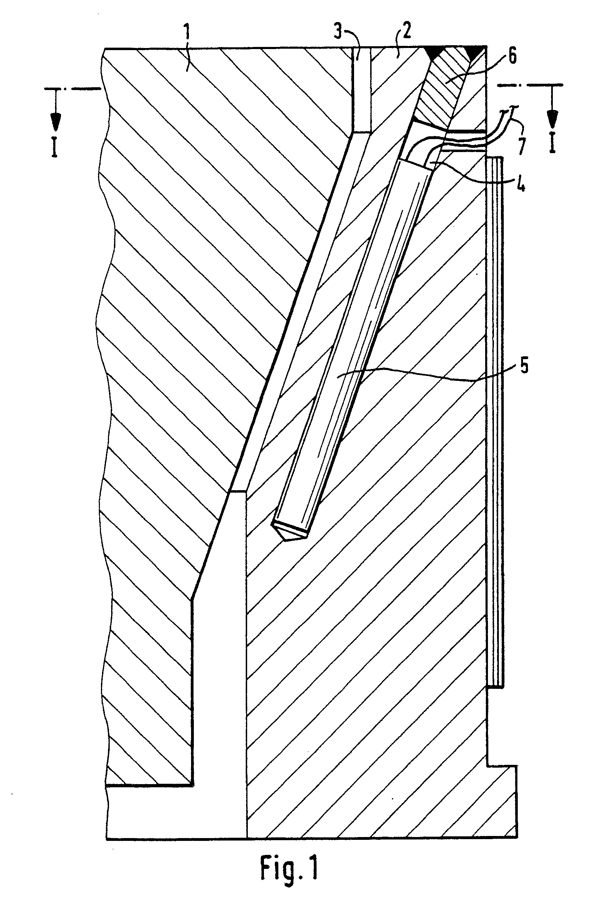

Fig.1 einen Längsschnitt durch eine Ringdüse und

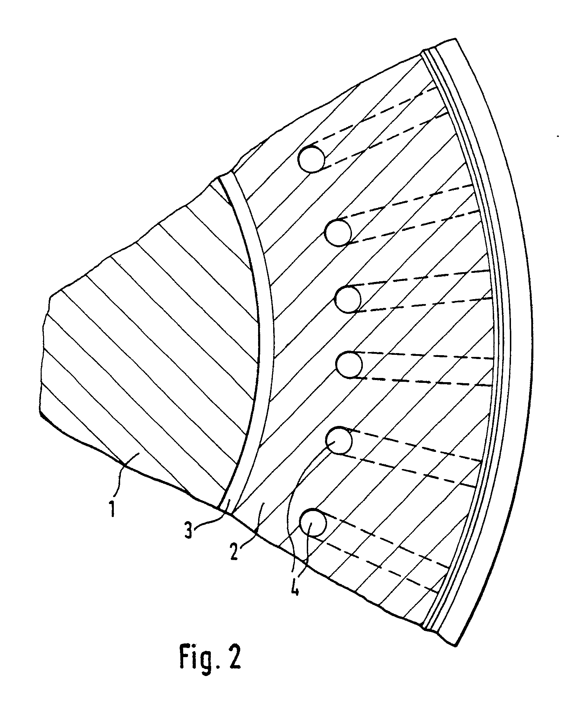

Fig.2 einen Querschnitt durch die Ringdüse längs der Linie I-I in Fig.1.

Die in der Zeichnung dargestellte Ringdüse besteht im wesentlichen aus einem zentralen Kern 1 und einem relativ zu diesem zentrierbaren Außenring 2. Zwischen dem Kern 1 und dem Außenring 2 ist der ringförmige Düsenspalt 3 gebildet.

Der Außenring 2 ist in gleichmäßigen Abständen über seinen Umfang mit Bohrungen 4 versehen, in die Heizpatronen eingesetzt sind. Die Bohrungen 4 sind schrägliegend angeordnet und nach dem Einschieben der Heizpatronen 5 an ihrem oberen Ende durch einen eingeschweißten Propfen 6 verschlossen. Die elektrischen Leitungen 7 sind durch eine radiale Bohrung mit der Bohrung 4 verbunden.

## Ansprüche

Ringdüse für Strangpressen, vorzugsweise Blaskopf zur Herstellung von Schlauchfolien aus thermoplastischen Kunststoffen, bestehend aus einem Innenring oder einem inneren Kern und einem Außenring, zwischen denen der ringförmige Düsenspalt gebildet ist,
**dadurch gekennzeichnet,**
daß der Innen- und/oder Außenring (1,2) in mehrere Temperiersektoren unterteilt ist, die mit Bohrungen (4) oder Aussparungen versehen sind, in die elektrische Heizpatronen (5) eingesetzt sind.

Fig.1

Fig. 2

# EUROPÄISCHER RECHERCHENBERICHT

Nummer der Anmeldung

**EP 90 11 7491**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 221 264  (HEPWORTH PLASTICS LTD) <br> * Ansprüche 1-4,7; Figuren 2,3 * <br> - - - | 1 | B 29 C <br> 47/86 <br> B 29 C 47/20 |
| X | EP-A-0 180 571  (E. HARTL) <br> * Spalte 6, Zeile 50 - Spalte 7, Zeile 26; Figuren 3,4 * <br> - - - | 1 | |
| X | EP-A-0 287 551  (CINCINNATI MILACRON INC.) <br> * Spalte 6, Zeilen 9-17; Figur 2a * <br> - - - | 1 | |
| X | US-A-3 412 231  (J.F. McELLIGOTT) <br> * Spalte 2, Zeilen 41-46; Figuren * <br> - - - | 1 | |
| A | FR-A-2 476 535  (FIRMA WINDMOLLER & HOLSCHER) <br> * Ansprüche 4,6 * <br> - - - - - | 1 | |

| | RECHERCHIERTE SACHGEBIETE (Int. Cl.5) |
|---|---|
| | B 29 C |

Der vorliegende Recherchenbericht wurde für alle Patentansprüche erstellt

| Recherchenort | Abschlußdatum der Recherche | Prüfer |
|---|---|---|
| Den Haag | 11 Januar 91 | BELIBEL C. |